# EUROPÄISCHE PATENTSCHRIFT

(11) **EP 1 062 412 B1**
(45) Veröffentlichungstag und Bekanntmachung des Hinweises auf die Patenterteilung: **09.04.2003**
(21) Anmeldenummer: 99939749.0
(22) Anmeldetag: 23.02.1999
(51) Int. Cl.: F02B 1/12, F02B 7/02

(54) **VERFAHREN ZUM BETRIEB EINER IM VIERTAKT ARBEITENDEN HUBKOLBEN-BRENNKRAFTMASCHINE**
METHOD FOR OPERATING A FOUR-STROKE RECIPROCATING INTERNAL COMBUSTION ENGINE
PROCEDE POUR FAIRE FONCTIONNER UN MOTEUR A COMBUSTION INTERNE QUATRE TEMPS A PISTON ALTERNATIF

(30) Priorität: 13.03.1998 DE 19810935
(43) Veröffentlichungstag der Anmeldung: 27.12.2000
(73) Patentinhaber: DaimlerChrysler AG, 70567 Stuttgart (DE)
(72) Erfinder: NIEBERDING, Rolf-Günther, 77300 Fontainebleau (FR)
(86) Internationale Anmeldenummer: EP9901145
(87) Internationale Veröffentlichungsnummer: WO99047797

(56) Entgegenhaltungen:
- WO-A-86/04111
- DE-A- 19 519 663
- FR-A- 1 234 262
- GB-A- 439 423
- GB-A- 2 277 776

## Beschreibung

Die Erfindung betrifft ein Verfahren zum Betrieb einer im Viertakt arbeitenden Hubkolben-Brennkraftmaschine der im Oberbegriff des Anspruchs 1 angegebenen Gattung.

Hubkolben-Brennkraftmaschinen mit innerer Verbrennung bieten bei Kompressionszündung homogener, magerer Gemische die Möglichkeit geringer Stickoxidbildung bei hohem Wirkungsgrad, wenn Drosselregelung und fettes Gemisch vermieden werden. Die Kompressionszündung funktioniert bei motorisch üblichen Verdichtungen nur mit Abgasrückhaltung. Bei niedriger Motorlast und -drehzahl sowie bei kaltem Motor reicht jedoch auch die Temperatursteigerung durch Abgasrückhaltung nicht zur sicheren Zündung der Frischladung aus.

In der DE-A 195 19 663 ist ein Verfahren zum Betrieb eines Verbrennungsmotors mit Kompressionszündung beschrieben. Hier wird in einer ersten Stufe ein mit äußerer Gemischbildung erzeugtes homogenes und mageres Luft/Kraftstoffgemisch bis nah an die Zündgrenze komprimiert. In einer zweiten Stufe wird eine Zusatzmenge des gleichen Kraftstoffs fein zerstäubt und unter Vermeidung von Wandberührungen in den Verbrennungsraum eingespritzt. Der spät eingespritzte Kraftstoff bildet eine Gemischwolke, die sich entzündet, da deren Zündgrenze aufgrund des höheren Kraftstoffgehalts unterhalb der in der ersten Stufe erreichten Kompressionstemperatur liegt. Diese Verhältnisse gelten bei höherer Motorlast und -Drehzahl und betriebswarmem Motor.

Der Erfindung liegt die Aufgabe zugrunde, ein Verfahren der im Oberbegriff des Anspruchs 1 angegebenen Gattung zu schaffen, das auch bei Niedriglast und Niedrigdrehzahl sowie bei Betrieb des kalten Motors eine sichere Zündung und eine verbrauchs- und schadstoffarme Verbrennung ermöglicht.

Diese Aufgabe wird durch ein Verfahren mit den Merkmalen des Anspruchs 1 gelöst.

Durch das erfindungsgemäße Verfahren entzündet die Hubkolben-Brennkraftmaschine das Gemisch aus Luft und Kraftstoff, über dessen Temperaturerhöhung. Die Temperaturerhöhung des Frischgemisches wird durch Mischung mit rückgehaltenem Abgas des vorhergehenden Zyklus herbeigeführt und durch die sich anschließende, geometrische Kompression des abgeschlossenen, maximalen Ausgangsvolumens bis auf ein verbleibendes Restvolumen. In dem komprimierten Volumen stellt sich eine Temperatur ein, die das Gemisch zur Entzündung bringt. Der Verbrennungsprozeß, der sich an die Kompressionszündung des homogenen, mageren Gemischs anschließt, ist ein durch die freigesetzte Energie sich selbst erhaltender Prozeß.

Das Abgas entsteht im Brennraum durch Verbrennung des Frischgemischs. Die während der Verbrennung freigesetzte Energie wird durch Expansion bis zum maximalen Brennraumvolumen abgeführt. Anschließend wird ein Auslaßorgan geöffnet und Abgas durch die Verringerung des Brennraumvolumens hinausgeschoben. Im Laufe des Ausschiebevorgangs, während der Verringerung des Brennraumvolumens, schließt das Auslaßorgan und hält das Abgas zurück. Dieses wird bis zum minimalen Brennraumvolumen komprimiert. Das rückgehaltene Abgas entstand bei einer Verbrennung unter Luftüberschuß. Die Verbrennungsphase liegt zwischen der Kompressions- und Expansionsphase im Bereich der maximalen geometrischen Verdichtung. Die Anzahl der thermodynamischen Phasen des Viertaktmotors beläuft sich damit auf fünf Phasen.

Zur Erweiterung des motorischen Betriebsbereichs mit Kompressionszündung homogener, magerer Gemische wird eine sechste thermodynamische Phase, die Aktivierungsphase, zwischengeschaltet. Während der Kompression des rückgehaltenen Abgases wird eine Aktivierungskraftstoffmenge in das Luftabgasgemisch gespritzt und mit den restlichen Luftanteilen im Brennraum möglichst homogen verteilt. Dem Kraftstoff wird thermische Energie durch Leitung und Kompression zugeführt, so daß eine chemische Reaktion und/oder eine Zündung eingeleitet wird. Durch eine vollständige Verbrennung des Aktivierungskraftstoffs wird die thermische Energie des verbliebenen Abgases zur Sicherung der Zündung im nächsten Zyklus erhöht. Ist die Verbrennung unvollständig, so wird zumindest die chemische Aktivität der rückgehaltenen Abgasmenge erhöht (Radikalbildung), ohne dabei die Temperatur deutlich anzuheben. In beiden Fällen und in deren Mischzustand kann von einer Aktivierung gesprochen werden. Durch die Aktivierung des rückgehaltenen Abgases kann durch eine geringere Masse desselben eine größere Frischladungsmasse entzündet werden.

Bei einer Verbrennung während der Abgaskompression erhöht sich der Druck- und Temperaturzustand des rückgehaltenen Abgases im Brennraum. Diese Art der Aktivierung wird auch kaskadische Verbrennung genannt, da die Verbrennung über zwei Zyklen stattfindet. Dies muß in einer späteren Ansteuerzeit des Einlasses berücksichtigt werden, um durch eine längere Expansion des aktivierten Abgases eine negative Druckdifferenz am Einlaßventil sicherzustellen. Eine Abgasvorlagerung oder Ladungsrückschiebung in das Saugrohr ist nicht vorgesehen, da die zur Reaktionseinleitung notwendige Abgasmenge durch Strömungs- und Mischungsbewegungen ihre spezifische Enthalpie verlieren.

Bei niedrigen Drehzahlen, also hohen Wärmeverlusten an der Wand, wird die maximale Aktivierung des Abgases angestrebt. Dabei besteht die Gefahr, daß eine vollständige Verbrennung bei der Abgaskompression das Druckniveau im Brennraum so anhebt, daß anschließend die Druckdifferenz zwischen der Umgebung und dem Brennraum nicht ausreicht, um in der verbliebenen Zeit der geöffneten Einlaßventile eine ausreichende Menge an Frischgas anzusaugen. Zur Steuerung von Druck und Temperatur des rückbehaltenen Abgases im Brennraum wird der Einspritzzeitpunkt des Aktivierungskraftstoffs variiert. Findet die Einspritzung früh, also noch während der Verringerung des Brennraumvolumens statt, so wird durch die Kompression die Temperatur des Gemischs erhöht, wodurch eine Reaktionseinleitung mit anschließender Verbrennung stattfindet. Findet die Einspritzung des Aktivierungskraftstoffs im Bereich des minimalen Brennraumvolumens statt, so verzögert die Vergrößerung dieses Volumens die chemische Aktivität (Radikalbildung), ohne die sich keine starke Temperatursteigerung im Abgas durch eine selbsterhaltende Reaktionstätigkeit einstellen kann.

Die Verdampfungsenergie des spät eingespritzten Kraftstoffs entzieht dem komprimierten, rückbehaltenen Abgas thermische Energie. Die Verdampfungsenergie kann auch verwendet werden, um eine unkontrollierte Nachzündung der unvollständig verbrannten Gemischmasse in der Kompression des rückgehaltenen Abgases zu verhindern. Die chemische Aktivierung des Abgases bewirkt eine frühere Einleitung der Hauptreaktion in der sich anschließenden vollständigen Kompressionsund Verbrennungsphase. Über den Zeitpunkt und die Menge der Aktivierungseinspritzung kann der Zündzeitpunkt der Frischladung bei der Hauptverbrennung gesteuert werden.

Auf diese Weise kann über den Regeleingriff einer abkühlenden Zündeinspritzung von Aktivierungskraftstoff eine unvollständige Umsetzung in der Hauptverbrennung unterbunden werden. Über mehrere Zyklen hinweg zeigt sich der Einfluß integraler Einflüsse durch Wandwärmeübertragung auf die Verbrennung. Über den geregelten Eingriff der Veränderung der Aktivierung kann der Einfluß der Wandwärmeübertragung innerhalb eines Zyklusses für eine Anzahl folgender Zyklen kompensiert werden. Diese Regelung zur Verbrennungsstabilisierung bedarf eines eigenen Regelkreises.

Die unvollständige Verbrennung erhöht die Abgasemission des motorischen Gesamtsystems nicht, da die Steuerzeiten des Einlasses immer so gewählt werden, daß nur Frischgas angesaugt wird. Eine eventuell unvollständige, chemische Reaktion während der Abgaskompression oder Expansion wird aufgrund der nachfolgenden Kompression mit hohem effektivem Verdichtungsverhältnis und der sich anschließenden Umsetzung vollständig umgesetzt. Die Aktivierung wird für den Fall eingesetzt, daß die zyklische Verbrennung bei weiterer Erhöhung des Kraftstoffanteiles im Frischgemisch oder der Abgasrückhaltung nicht mehr aufrechterhalten werden kann. Dieses wird durch unruhigen Lauf oder Lastabfall im Betrieb des Motors erkannt.

Die Logik der Regelung der Zündeinspritzung versucht die Zündeinspritzmenge minimal im Hinblick auf eine verbrauchsoptimale Verbrennungsgestaltung zu halten. Die Regelung begrenzt die maximale Einspritzmenge durch das Signal des Luftmangels im Abgas (Luft-Kraftstoffverhältnis ≤ 1) durch die Lambda-Sonde im Abgasstrang.

Die effektive Kompression des Restgases ist abhängig von dem rückgehaltenen Abgasanteil. Sie liegt in den meisten Fällen auf oder unterhalb der halben geometrischen Kompression. Aufgrund der geringen Kraftstoffmengen für die Aktivierung und des noch höheren Abgasanteils fallen auch bei Zündverbrennungen die Spitzendrucke und Spitzentemperaturen im Abgas so gering aus, daß keine Stickoxide in nennenswerter Menge entstehen.

Weitere Merkmale der Erfindung ergeben sich aus den weiteren Ansprüchen und aus der folgenden Beschreibung sowie aus der Zeichnung, in der Ausführungsbeispiele der Erfindung schematisch dargestellt sind. Es zeigen:
- Fig. 1: eine schematische Darstellung einer Hubkolben-Brennkraftmaschine mit einem Steuergerät für die Gaswechselorgane und die Einspritzventile sowie mit Mitteln zur Verbrennungs- und Drehmomentanalyse,
- Fig. 2: ein schematisches Kennfeld der Verteilung von Zünd- , Haupt- und Nacheinspritzung über der Motorlast,
- Fig. 3: ein Zylinderdruckdiagramm mit den Steuerzeiten der Gaswechselorgane und der Einspritzventile.

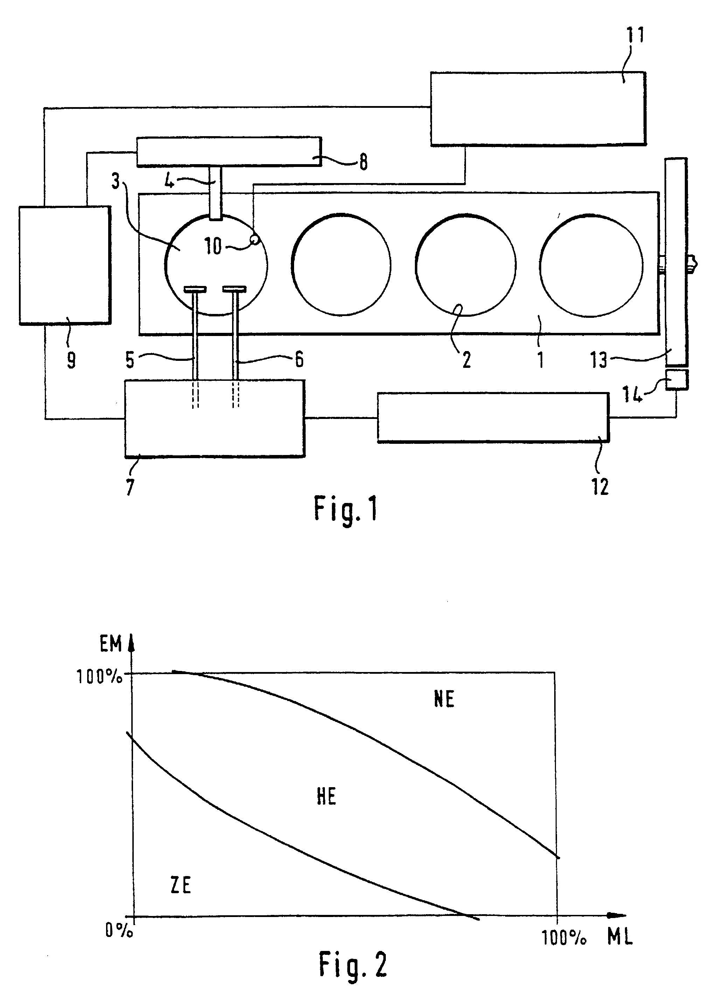

Der in Fig. 1 schematisch dargestellte Verbrennungsmotor besitzt einen Zylinderblock 1 mit vier Zylindern 2, in denen Kolben dichtend geführt sind und die durch einen Zylinderkopf verschlossen sind. Zylinder 2, Kolben und Zylinderkopf umschließen einen Brennraum 3, in dem die Verbrennung stattfindet.Im Zylinderkopf befinden sich pro Brennraum 3 ein Kraftstoffeinspritzventil 4, ein Einlaßorgan 5 und ein Auslaßorgan 6. Die Gaswechselorgane 5, 6 werden von einer Betätigungsvorrichtung 7, das Kraftstoffeinspritzventil 4 von einer Einspritzbetätigung 8 geöffnet und geschlossen. Ein Steuergerät 9 steuert den Öffnungs- und Schließzeitpunkt der Gaswechselorgane 5, 6 und des Kraftstoffeinspritzventils 4 stufenlos.

Die Verbrennung wird mit einer Ionenstromsonde 10 in einem Verbrennungsanalysator 11 überwacht, der mit dem Steuergerät 9 verbunden ist. Er wird ergänzt durch einen Drehmomentanalysator 12, der die Drehungsgleichförmigkeit der Kurbelwelle am Umfang eines Schwungrads 13 mit Hilfe eines Drehzahlsensors 14 detektiert und an das Steuergerät 9 weiterleitet. Zusätzlich kann auch ein Klopfsensor zur Verbrennungsbeurteilung herangezogen werden. Ionenstromsonde 10, Drehzahlsensor 14 und ggf. ein Klopfsensor liefern Echtzeitsignale von Lage und Verlauf der Verbrennung für das Steuergerät 9, das unter Berücksichtigung dieser Werte die Steuerung des Kraftstoffeinspritzventils 4 und der Gaswechselorgane 5, 6 bewirkt.

Die Fig. 2 zeigt ein schematisches Kennfeld der gesamten Einspritzmengen EM über der Motorlast ML, aufgeteilt in Zündeinspritzung ZE, Haupteinspritzung HE und Nacheinspritzung NE. Die Haupteinspritzung HE findet bei jeder Motorlast ML statt, während die Zündeinspritzung ZE nur bei niedriger und die Nacheinspritzung ME nur bei hoher Motorlast ML angewendet wird. Details der Kraftstoffeinspritzung werden in einer folgenden Funktionsbeschreibung erläutert.

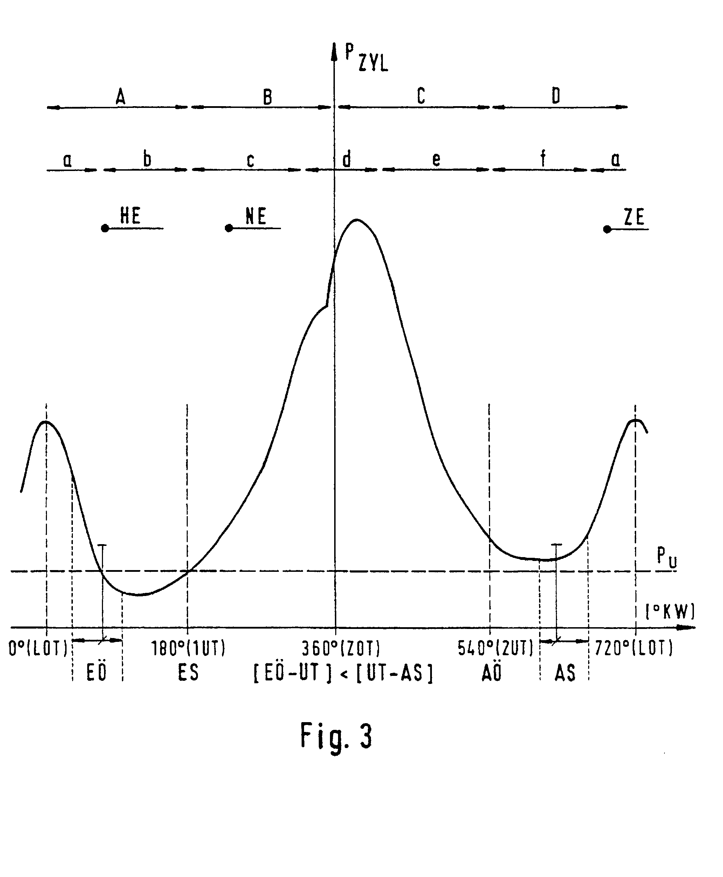

In Fig. 3 ist ein sich über mehr als 720° Kurbelwinkel erstreckendes Zylinderdruckdiagramm mit den Steuerzeiten bzw. Steuerzeitenbereichen der Gaswechselorgane 5, 6 und der Kraftstoffeinspritzventile 4 sowie mit vier Takten und sechs Phasen des Arbeitszyklusses dargestellt. Anhand dieses Zylinderdruckdiagramms soll die Funktion des erfindungsgemäßen Verfahrens erläutert werden:

Beim Viertaktverfahren entspricht ein Takt einem vollen Kolbenhub. Der erste Takt A beginnt im Ladungswechsel Totpunkt LOT bei 0° Kurbelwinkel und endet im ersten unteren Totpunkt 1UT bei 180° Kurbelwinkel. Ihm folgt der zweite Takt B, der im Zündungstotpunkt ZOT endet. Darauf beginnt der dritte Takt C, der im zweiten unteren Totpunkt ZOT bei 540° Kurbelwinkel endet. Der anschließende vierte Takt D endet im Ladungswechseltotpunkt LOT bei 720° Kurbelwinkel. Dann beginnt die nächste Taktfolge.

Die sechs Phasen des Arbeitszyklusses hängen überwiegend von den Steuerzeiten der Gaswechselorgane 5, 6 ab und sind zum Teil taktübergreifend.

Der Arbeitszyklus beginnt mit einer Aktivierungsphase a, bei der zwischen Auslaßschluß AS und Einlaßöffnen EÖ im Bereich des Ladungswechseltotpunkts LOT rückgehaltenes Abgas komprimiert und expandiert wird. In der Aktivierungsphase a wird bei geringer Motorlast ML Aktivierungskraftstoff durch eine Zündeinspritzung ZE in das rückgehaltene Abgas eingespritzt. Bei sehr niedriger Motorlast ML geschieht dies während der Kompression der Aktivierungsphase a. In dem heißen rückgehaltenen Abgas verdampft der fein zerstäubte Aktivierungskraftstoff und bildet mit dem Restsauerstoff des rückgehaltenen Abgases ein zündfähiges Gemisch. Der Restsauerstoff entstand aus dem mageren Gemisch des vohergehenden Arbeitszyklusses. Im Bereich des Ladungswechseltotpunktes LOT kommt es zur Zündung des Aktivierungskraftstoffes mit der Folge einer Temperaturund Druckerhöhung des rückgehaltenen Abgases. Damit sind die Voraussetzungen für eine sichere Zündung der Haupteinspritzmenge im Bereich des Zündtotpunkts ZOT auch bei geringer Motorlast ML und Kaltmotorbetrieb gegeben.

Da es sich bei dem Aktivierungskraftstoff nur um geringe Mengen handelt, die außerdem die stark abgashaltige Atmosphäre verbrennen, bildet sich dabei praktisch kein Stickoxid. Die Temperaturanhebung des rückgehaltenen Abgases gestattet eine Verringerung von dessen Menge zugunsten einer höheren Frischgasmenge.

Mit zunmehender Motorlast ML und Motortemperatur wird die Zündeinspritzung ZE nach später verschoben. Bei einer Zündeinspritzung im Ladungswechseltotpunkt LOT oder danach kommt es zu keiner Zündung, sondern zu einer Radikalbildung und chemischen Aktivierung des Aktivierungskraftstoffs, die zur gewünschten Zündverbesserung der Hauptkraftstoffmenge führt. Der teilverbrannte oder aktivierte Aktivierungskraftstoff wird bei der Hauptverbrennung vollständig verbrannt, wodurch Kohlenwasserstoffemission verhindert wird.

Oberhalb einer bestimmten Motorlast ML und bei betriebswarmem Motor entfällt die Zündeinspritzung aufgrund des ausreichenden Abgasanteils, wie dies aus der Darstellung in Fig. 2 ersichtlich ist.

Das Einlaßöffnen EÖ ist für den Zeitpunkt des Unterschreitens des Umgebungsdrucks Pᵤ im Brennraum 3 festgelegt. Dadurch wird ein Rückexpandieren von Abgas in den Ansaugtrakt und damit ein Abkühlen des Abgases vermieden. Der Zeitpunkt des Einlaßöffnens EÖ und damit die Mängel der ansaugbaren Frischladung und die dadurch mögliche Motorlast ML hängen vom Zeitpunkt des Auslaßschließens AS und von der Menge und dem Einspritzeitpunkt der Zündeinspritzung ZE ab. Deswegen ist in Fig. 3 für das Auslaßschließen AS und für das Einlaßöffnen EÖ ein Bereich angegeben, der ein Verstellen der Motorlast ML erlaubt. Mit dem Einlaßöffnen EÖ beginnt die Ansaugphase b und die Haupteinspritzung HE. Die Ansaugphase b reicht bis zum Einlaßschließen ES. Dies geschieht beim Überschreiten des Umgebungsdrucks Pᵤ im Brennraum 3 im Bereich des ersten unteren Totpunkts 1UT. Die Haupteinspritzung HE reicht, je nach Motorlast ML über diesen Zeitpunkt hinaus. Durch die früh beginnende Haupteinspritzung HE wird eine intensive Mischung von Hauptkraftstoff mit Frischladung und rückgehaltenem Abgas zu einem homogenen, mageren Luft/Abgas/Kraftstoff-Gemisch bewirkt.

Dieses wird ab der beim Einlaßschließen ES beginnenden Kompressionsphase c komprimiert. Dabei steigt die Temperatur des homogenen, mageren Gemischs bis zu dessen Zündpunkt an. Dieser liegt kurz vor dem Zündungstotpunkt ZOT. Seine Lage wird durch Menge und Einspritzzeitpunkt des Aktivierungskraftstoffs und ggf. durch Variation der effektiven Verdichtung mittels variablem Einlaßschluß gesteuert.

In der sich der Zündung anschließenden Verbrennungsphase d findet eine sich selbst erhaltende oder sogar sich selbstbeschleunigende Verbrennung statt. Da letztere bei höherer Motorlast ML leicht zu einer klopfenden Verbrennung führt, ist für diesen Betriebsbereich eine einfache oder sequenzielle Nacheinspritzung NE in die Kompressionsphase c vorgesehen. Dadurch wird aufgrund der relativ späten Kraftstoffeinspritzung durch die Verdampfungskälte des Kraftstoffs eine lokale Gemischabkühlung mit daraus folgender Zündverzögerung bewirkt, die einen klopffreien Verlauf der Verbrennung zur Folge hat.

Der Verbrennungsphase d schließt sich die Expansionsphase e an, die durch das Auslaßöffnen AÖ im Bereich des zweiten unteren Totpunktes 2UT beendet wird. Das Auslaßöffnen AÖ kann in Abhängigkeit von der Motorlast ML und der Motordrehzahl zum Erreichen maximalen Wirkungsgrads variiert werden. Der Expansionsphase e schließt sich die Ausschiebephase f an, die durch den variablen Auslaßschluß AS beendet wird, der zugleich den nächsten Arbeitszyklus eröffnet.

Ein Regelkreis, der ungewollte Schwankungen von Motordrehzahl und Motorlast ML berücksichtigt, stabilisiert den Zündzeitpunkt und den Verlauf der Hauptverbrennung durch Menge und Einspritzzeitpunkt des Aktivierungskraftstoffs. Dabei minimiert der Regelkreis die Menge des Aktivierungskraftstoffs und begrenzt die Gesamtkraftstoffmenge auf die stöchiometrische. Auf diese Weise wird ein funktionssicheres Verfahren zum Betrieb einer Brennkraftmaschine mit geringem Kraftstoffverbrauch und geringer Schadstoffemission erreicht.

Alternativ für den Einsatz der chemischen Aktivierung bietet sich die Steuerung des Zündzeitpunktes über die Lage des Einspritzzeitpunktes der Haupteinspritzung in die noch rückgehaltene Abgasmenge bei ausreichendem Volumen vor Öffnung der Einlaßorgane an.

## Patentansprüche

1. Verfahren zum Betrieb einer im Viertakt arbeitenden Hubkolben-Brennkraftmaschine mit einem homogenen, mageren Grundgemisch aus Luft, Kraftstoff und zurückgehaltenem Abgas sowie mit einer Kompressionszündung und direkter Kraftstoffeinspritzung in einen Brennraum (3), dessen Volumen sich zyklisch ändert und der durch mindestens ein Einlaßorgan (5) mit Frischgas füllbar ist und die Verbrennungsabgase durch mindestens ein Auslaßorgan (6) zumindest teilweise aus dem Brennraum (3) ausschiebbar sind,
**dadurch gekennzeichnet, daß** in einer Aktivierungsphase (a) das rückgehaltene Abgas im Bereich des Ladungswechseltotpunkts (LOT) komprimiert und anschließend expandiert wird und daß in dieser Phase des Arbeitszyklusses Aktivierungskraftstoff zur Stabilisierung der Hauptverbrennung in den Brennraum (3) eingespritzt wird.

2. Verfahren nach Anspruch 1,
**dadurch gekennzeichnet, daß** ein Regelkreis unter Berücksichtigung unbeabsichtigter Drehzahl- und Lastschwankungen der Brennkraftmaschine der Hauptverbrennung durch Menge und Einspritzzeitpunkt des Aktivierungskraftstoffs stabilisiert.

3. Verfahren nach Anspruch 2,
**dadurch gekennzeichnet, daß** der Regelkreis die Menge des Aktivierungskraftstoffs minimiert und die Gesamtkraftstoffmenge auf die stöchiometrische begrenzt.

4. Verfahren nach Anspruch 2 oder 3,
**dadurch gekennzeichnet, daß** der Regelkreis den Zündzeitpunkt und den Verlauf der Hauptverbrennung durch Zeitpunkt und Menge der Einspritzung des Aktivierungskraftstoffs beeinflußt.

5. Verfahren nach einem der Ansprüche 1 bis 4,
**dadurch gekennzeichnet, daß** der Aktivierungskraftstoff bei niedriger Motorlast und -drehzahl sowie bei Betrieb der kalten Brennkraftmaschine vorzugsweise zu Beginn der Kompression des rückgehaltenen Abgases, mit steigender Motorlast und -drehzahl sowie mit steigender Motortemperatur jedoch später eingespritzt wird und ab einer bestimmten Motorlast und -drehzahl sowie bei betriebswarmer Brennkraftmaschine entfällt.

6. Verfahren nach einem der Ansprüche 1 bis 5,
**dadurch gekennzeichnet, daß** der Aktivierungskraftstoff im rückgehaltenen Abgas homogen verteilt wird.

7. Verfahren nach einem der Ansprüche 1 bis 6,
**dadurch gekennzeichnet, daß** eine Steuerung des Zündzeitpunktes über die Lage des Einspritzzeitpunktes der Hauptkraftstoffeinspritzung in die noch rückgehaltene Abgasmenge bei ausreichendem Volumen vor Öffnung der Einlaßorgane erfolgt.

8. Verfahren nach einem der Ansprüche 1 bis 7,
**dadurch gekennzeichnet, daß** der Beginn der Kompression des rückgehaltenen Abgases durch den Schließzeitpunkt des Auslaßorgans (6) und das Ende der Expansion des rückgehaltenen Abgases durch den Öffnungszeitpunkt des Einlaßorgans (5) bestimmt werden.

9. Verfahren nach Anspruch 8,
**dadurch gekennzeichnet, daß** das Einlaßorgan (5) erst geöffnet wird, nachdem der Druck im Brennraum (3) den Umgebungsdruck unterschritten hat.

10. Verfahren nach einem der Ansprüche 1 bis 9,
**dadurch gekennzeichnet, daß** die effektive Verdichtung des rückgehaltenen Abgases von dessen Menge abhängt und unterhalb der maximalen geometrischen Verdichtung liegt.

## Claims

1. A process for operating a four-stroke reciprocating-piston internal combustion engine with a homogenous lean basic mixture of air, fuel and retained exhaust gas and with compression ignition and direct fuel injection into a combustion space (3) the volume of which changes cyclically and which can be filled with fresh gas through at least one inlet member (5), it being possible to expel the combustion exhaust gases at least partially from the combustion space (3) through at least one outlet member (6),
**characterised in that**
in an activation phase (a) the retained exhaust gas is compressed in the region of the gas-exchange dead centre (LOT) and is subsequently expanded, and in this phase of the work cycle activation fuel is injected into the combustion space (3) in order to stabilise main combustion.

2. A process in accordance with Claim 1,
**characterised in that**
a control loop stabilises the main combustion by means of the quantity and injection point of the activation fuel and taking into account unintended fluctuations in the speed and load of the internal combustion engine.

3. A process in accordance with Claim 2,
**characterised in that**
the control loop minimises the quantity of activation fuel and limits the total fuel quantity to the stoichiometric quantity.

4. A process in accordance with Claim 2 or 3,
**characterised in that**
the control loop influences the ignition point and the profile of main combustion by means of the point and quantity of injection of the activation fuel.

5. A process in accordance with one of Claims 1 to 4,
**characterised in that**
at low engine load and low engine speed and when the internal combustion engine is running cold, the activation fuel is preferably injected at the start of the compression of the retained exhaust gas, that as engine load and engine speed increase and engine temperature rises said activation fuel is injected later and that beyond a specific engine load and engine speed and when the internal combustion engine is running hot, injection does not take place.

6. A process in accordance with one of Claims 1 to 5,
**characterised in that**
the activation fuel is distributed homogeneously in the retained exhaust gas.

7. A process in accordance with one of claims 1 to 6,
**characterised in that**
the ignition point is controlled by means of the position of the injection point of main fuel injection into the still retained exhaust-gas quantity, where there is sufficient volume before the opening of the inlet members.

8. A process in accordance with one of the Claims 1 to 7,
**characterised in that**
the start of compression of the retained exhaust gas is determined by the closing point of the outlet member (6) and the end of expansion of the retained exhaust gas is determined by the opening point of the inlet member (5).

9. A process in accordance with Claim 8,
**characterised in that**
the inlet member (5) is not opened until the pressure in the combustion space (3) falls below the ambient pressure.

10. A process in accordance with one of Claims 1 to 9,
**characterised in that**
the effective compression of the retained exhaust gas depends on the quantity of the latter and is below the maximum geometric compression.

## Revendications

1. Procédé pour faire fonctionner un moteur à combustion interne à pistons alternatifs à quatre temps, avec un mélange de base homogène pauvre à base d'air, de carburant et de gaz d'échappement retenus, et avec allumage par compression et injection directe de carburant dans une chambre de combustion (3) dont le volume se modifie cycliquement et qui est susceptible d'être remplie avec du gaz frais à travers au moins un organe d'admission (5), les gaz d'échappement de combustion étant susceptibles d'être expulsés au moins partiellement hors de la chambre de combustion (3) à travers au moins un organe d'échappement (6),
**caractérisé en ce que** pendant une phase d'activation (a) les gaz d'échappement retenus sont comprimés dans la plage du point mort des mouvements de gaz (LOT) et ensuite expansés, et **en ce que** pendant cette phase du cycle de travail le carburant d'activation pour stabiliser la combustion principale est injecté dans la chambre de combustion (3).

2. Procédé selon la revendication 1, **caractérisé en ce qu'**un circuit de régulation stabilise la combustion principale par la quantité et par le point d'injection du carburant d'activation, en prenant en compte des fluctuations accidentelles de la vitesse de rotation et de la charge du moteur à combustion interne.

3. Procédé selon la revendication 2, **caractérisé en ce que** le circuit de régulation minimise la quantité du carburant d'activation et limite la quantité totale du carburant à la quantité stoechiométrique.

4. Procédé selon l'une ou l'autre des revendications 2 et 3, **caractérisé en ce que** le circuit de régulation influence l'instant d'allumage et l'évolution de la combustion principale par l'instant et par la quantité de l'injection du carburant d'activation.

5. Procédé selon l'une des revendications 1 à 4, **caractérisé en ce que** lors d'une charge et d'une vitesse de rotation faibles du moteur ainsi qu'en fonctionnement du moteur à combustion interne à froid, le carburant d'activation est injecté de préférence au début de la compression des gaz d'échappement retenus, **en ce qu'**il est injecté plus tard lorsque la charge et la vitesse du moteur augmentent et que la température du moteur augmente, et **en ce qu'**il est coupé à partir d'une charge et d'une vitesse de rotation déterminées du moteur ainsi que dans l'état chaud en fonctionnement du moteur à combustion interne.

6. Procédé selon l'une des revendications 1 à 5, **caractérisé en ce que** le carburant d'activation est réparti de façon homogène dans les gaz d'échappement retenus.

7. Procédé selon l'une des revendications 1 à 6, **caractérisé en ce qu'**une commande de l'instant d'allumage s'effectue via la position de l'instant d'allumage de l'injection principale du carburant dans la quantité de gaz d'échappement encore retenue à un volume suffisant avant l'ouverture des organes d'admission.

8. Procédé selon l'une des revendications 1 à 7, **caractérisé en ce que** le début de la compression des gaz d'échappement retenus est déterminé par l'instant de fermeture de l'organe d'échappement (6), et la fin de l'expansion des gaz d'échappement retenus est déterminée par l'instant d'ouverture de l'organe d'admission (5).

9. Procédé selon la revendication 8, **caractérisé en ce que** l'organe d'admission (5) est ouvert uniquement après que la pression dans la chambre de combustion (3) soit passée au-dessous de la pression ambiante.

10. Procédé selon l'une des revendications 1 à 9, **caractérisé en ce que** la compression effective des gaz d'échappement retenus dépend de leur quantité et se situe au-dessous de la compression géométrique maximale.
